# FASCICULE DE BREVET EUROPEEN

(11) **EP 3 713 218 B1**
(45) Date de publication et mention de la délivrance du brevet: **26.07.2023**
(21) Numéro de dépôt: 20163386.4
(22) Date de dépôt: 16.03.2020
(51) Int. Cl.: H04N 23/61

(54) **KIT D'IDENTIFICATION DE BAGAGE**
SET ZUR IDENTIFIZIERUNG VON GEPÄCK
LUGGAGE IDENTIFICATION KIT

(30) Priorité: 22.03.2019 FR 1902990
(43) Date de publication de la demande: 23.09.2020
(73) Titulaire: Idemia Identity & Security France, 92400 Courbevoie (FR)
(72) Inventeur: TROUBAT, Jean-Claude, 92400 COURBEVOIE (FR); LUCAS, Erik, 92400 COURBEVOIE (FR)
(74) Mandataire: Idemia

(56) Documents cités:
- EP-A1- 1 725 451
- EP-B1- 1 725 451
- WO-A1-2017/098397
- US-A1- 2018 018 627

## Description

La présente invention concerne le domaine du transport de bagage et plus particulièrement le domaine du transport de passagers et de leurs bagages.

### ARRIERE PLAN DE L'INVENTION

Il est connu dans les aéroports d'attacher à chaque bagage une étiquette comportant un identifiant permettant de relier le bagage à un passager et à un vol. Or, il arrive que l'étiquette soit altérée ou perdue lors des manipulations du bagage, dégradant sa lisibilité et entraînant l'égarement dudit bagage et le mécontentement de son propriétaire. Ceci a des conséquences préjudiciables pour la compagnie aérienne ayant pris en charge le bagage, en termes d'image d'une part, mais également en termes financiers d'autre part, la compagnie aérienne étant tenue d'indemniser le passager dont le bagage est irrémédiablement perdu. Les compagnies aériennes sont donc incitées à mobiliser des moyens permettant de stocker les bagages perdus, d'identifier leurs propriétaires et de les acheminer jusqu'à leurs propriétaires. Ces procédures sont d'autant plus coûteuses que les bagages perdus sont nombreux et que le temps nécessaire à l'identification de leurs propriétaires est important.

Le document WO 2017/098397 A1 divulgue les caractéristiques définies dans le préambule de la revendication 1. Le document EP 1 725 451 B1 divulgue un dispositif d'identification d'un bagage comprenant une caméra montée sur un poteau à coté d'un support de bagage. Le document US2018/0018627 A1 divulgue différents arrangements de caméras disposées autour d'un support de bagage.

### OBJET DE L'INVENTION

Un but de l'invention est de remédier au moins partiellement aux inconvénients précités.

### BREF EXPOSE DE L'INVENTION

L'invention est définie par la revendication 1 et des variantes avantageuses sont définies par les revendications dépendantes 2-10.

Ainsi, l'identification du bagage n'est pas limitée à une étiquette apposée sur celui-ci mais sur toute caractéristique visuelle qui peut le distinguer d'un autre bagage.

D'autres caractéristiques et avantages de l'invention ressortiront à la lecture de la description qui suit d'un mode de réalisation particulier et non limitatif de l'invention telle que définie par les revendications.

### BREVE DESCRIPTION DES DESSINS

Il sera fait référence aux dessins annexés, parmi lesquels :
[Fig. 1] La figure 1 est une vue schématique d'un dispositif d'identification d'un bagage mis en oeuvre lors d'une phase d'enrôlement d'un bagage ;
[Fig. 2] La figure 2 est une vue schématique représentant la circulation des bagages dans une infrastructure de transport ;
[Fig. 3] La figure 3 est une vue schématique illustrant une étape de reconnaissance d'un bagage.

### DESCRIPTION DETAILLEE DE L'INVENTION

L'invention est ici décrite en application à la circulation des bagages dans une infrastructure de transport telle qu'un aéroport, une gare ferroviaire ou routière, un port...et plus particulièrement ici aux bagages qui sont amenés par les passagers embarquant dans un véhicule au départ de ladite infrastructure de transport et qui doivent voyager dans la soute dudit véhicule dans lequel leurs propriétaires ont pris place. Bien entendu, l'invention s'applique également aux bagages des passagers en correspondance qui sont introduits dans l'installation de traitement des bagages par le personnel de l'infrastructure de transport ou de la compagnie ayant affrété le véhicule.

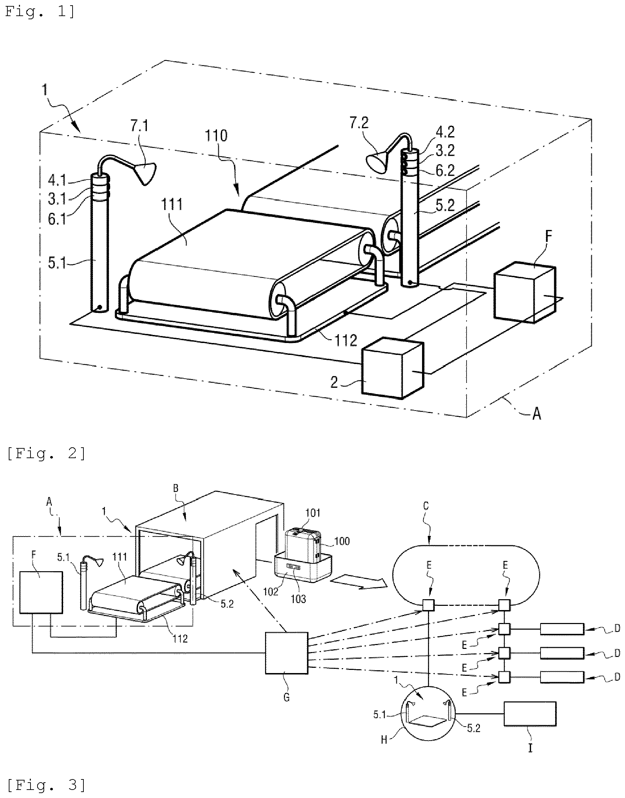

Cet exemple est non limitatif et l'homme du métier transposera sans aucune difficulté technique l'identification de bagages perdus selon l'invention quelle que soit l'infrastructure de transport considérée. En référence à la figure 2, les bagages 100 circulent dans une installation de traitement des bagages d'une infrastructure de transport de la manière suivante :
- le passager amène son bagage 100 (il pourrait en avoir plusieurs) à un comptoir d'enregistrement A dans lequel le bagage 100 est pesé et une étiquette de suivi 101 est attachée audit bagage 100 ;
- le bagage 100 est évacué du comptoir d'enregistrement A pour arriver dans une première zone de traitement automatique B dans laquelle le bagage 100 est disposé dans un chariot 102 pourvu d'une puce d'identification RFID 103 ;
- le chariot 102 est inséré dans un circuit de transport C (on notera que la figure 2 n'est pas à l'échelle) qui dessert plusieurs quais de chargement D et qui comprend des aiguillages E commandés en fonction de la puce d'identification RFID 103 pour amener le chariot 102 au quai de chargement D correspondant au véhicule que doit emprunter le propriétaire du bagage 100. Le circuit de transport C comprend des moyens connus en eux-mêmes pour déplacer les chariots 102, et notamment des rouleaux motorisés, des tapis roulants, des tronçons descendant, des élévateurs...
- au quai de chargement D, le bagage 100 est chargé dans une remorque qui est amenée jusqu'au véhicule pour permettre le chargement des bagages dans la soute dudit véhicule.

Le comptoir d'enregistrement A comprend un tapis roulant 110 permettant d'amener le bagage 100 au circuit de transport C. Le tapis roulant 110 comprend un tronçon de pesage 111 comportant un organe de pesage 112 relié à un terminal informatique F qui est relié à un système informatique G de gestion des passagers et des bagages. Le terminal informatique F est programmé pour :
- accéder aux réservations d'un voyage (tel qu'un vol, un voyage en train, bus ou bateau) d'un opérateur d'une infrastructure de transport comme une compagnie aérienne,
- éditer des cartes d'embarquement destinées aux passagers, comportant notamment le nom du passager, le numéro et les horaires du voyage, la porte d'embarquement...
- éditer des étiquettes de suivi 101 comportant un numéro liant notamment le nom du passager avec le numéro du voyage ;
- enregistrer le numéro de chaque étiquette de suivi 101 dans une base de données mettant en relation le nom du passager, son voyage et le numéro de l'étiquette de suivi 101 attachée à chacun des bagages 100 du passager.

Le système informatique de gestion G héberge la base de données ci-dessus mentionnée et est programmé pour lier le numéro de l'étiquette de suivi 101 attachée au bagage 100 et la puce d'identification RFID 103 du chariot 102, et pour commander les aiguillages E, au fur et à mesure qu'ils sont atteints par le chariot 102, de telle manière que les aiguillages E dirigent le chariot 102 vers le quai de chargement D correspondant au vol. De manière connue en elle-même, des lecteurs de puces RFID sont disposés en amont de chaque aiguillage E pour identifier le chariot abordant l'aiguillage en question et commander celui-ci de manière adéquate.

L'installation de traitement des bagages comprend en outre une zone H de récupération de bagages égarés. L'égarement de ces bagages peut résulter d'une mauvaise lisibilité ou de l'absence de l'étiquette de suivi 101 ou d'une mauvaise lisibilité de la puce d'identification RFID 103. Dans cette zone H, un opérateur tente de déchiffrer l'étiquette de suivi 101 pour pouvoir réintroduire le bagage et son chariot dans le circuit de transport C ou, en cas d'échec, pour diriger le bagage vers une aire de stockage I des bagages perdus où le bagage sera enregistré pour pouvoir être réclamé par son propriétaire. Les bagages sont amenés dans la zone H automatiquement par les aiguillages E ou par un agent de l'opérateur de l'infrastructure de transport.

Le comptoir d'embarquement A et la zone H sont tous deux pourvus d'un dispositif d'identification de bagage, généralement désigné en 1, qui va maintenant être décrit en détail.

En référence à la figure 1, le dispositif d'identification 1 comprend un support de bagage et au moins un organe d'acquisition d'images du bagage selon au moins deux directions de prise de vue inclinées l'une par rapport à l'autre, et une unité informatique 2 de traitement d'images programmée pour commander l'organe d'acquisition et extraire des images des caractéristiques représentatives du bagage. Par directions inclinées l'une par rapport à l'autre, on entend que les projections des deux directions de prise de vue dans un plan horizontal forment entre elles un angle non nul et que les projections des deux directions de prise de vue dans un plan vertical forment entre elles un angle non nul.

L'organe d'acquisition comprend ici deux paires de capteurs optiques 3.1, 4.1 et 3.2, 4.2 reliées à l'unité informatique 2 de traitement d'images. Les capteurs 3.1, 3.2 et les capteurs 4.1, 4.2 sont sensibles à des plages de longueurs d'onde différentes. Plus précisément, les capteurs 3.1, 4.1 sont constitués chacun par une paire de caméras sensibles au rayonnement infrarouge et les capteurs 3.2, 4.2 sont constitués chacun par une caméra sensible au rayonnement visible. Les caméras de chaque capteur 3.1, 3.2 sont disposées l'une par rapport à l'autre pour permettre une vision stéréoscopique et une mesure de distance.

Chaque paire de capteurs 3.1, 4.1 et 3.2, 4.2 est montée sur un poteau 5.1, 5.2.

Les poteaux 5.1, 5.2 ont des hauteurs différentes et s'étendent verticalement en des positions diamétralement opposées de part et d'autre d'un centre du support de bagage.

Chaque poteau 5.1, 5.2 porte également un émetteur 6.1, 6.2 d'un faisceau lumineux structuré ayant des longueurs d'onde comprises dans le domaine infrarouge et une lampe 7.1, 7.2 d'éclairage du support dans le domaine visible. Les émetteurs 6.1, 6.2 et les lampes 7.1, 7.2 sont reliés à l'unité informatique 2. Ainsi, chacun des capteurs 3.1, 3.2 peut mesurer la distance entre ledit capteur et des points lumineux projetés par l'émetteur 6.1, 6.2 sur le bagage afin de faire une représentation 3D du bagage (carte de profondeurs) .

L'unité informatique 2 comprend de façon connue en elle-même un processeur et une mémoire contenant un programme ayant des instructions agencées pour traiter les images fournies par les capteurs 3.1, 4.1, 3.2, 4.2 et en extraire des caractéristiques distinctives visuelles qui comprennent de façon non limitative : la forme et des dimensions du bagage, la couleur du bagage, la brillance du bagage, la forme et des dimensions d'une poignée du bagage, la forme et des dimensions de roulettes, un profil des arêtes du bagage, la forme et les dimensions d'un motif présent sur le bagage...

Plus précisément, les images fournies par les caméras 3.2, 4.2 permettent de déterminer la plupart des caractéristiques distinctives visuelles du bagage 100 et en particulier sa couleur qui ressort grâce à l'éclairage procuré par les lampes 7.1, 7.2 (comme cet éclairage est constant pour tous les dispositifs, la couleur d'un bagage ressort toujours de la même manière quel que soit le dispositif utilisé). Les lampes 7.1, 7.2 sont en outre sélectionnées pour assurer un éclairement du bagage suffisant pour l'acquisition d'images nettes compte tenu de la sensibilité et des vitesses d'acquisition des capteurs optoélectroniques des caméras.

Les images fournies par les caméras 3.1, 4.1 permettent de déterminer la plupart des caractéristiques distinctives visuelles du bagage 100 et en particulier sa forme et ses dimensions grâce au faisceau lumineux structuré qui est projeté sur le bagage 100 par les émetteurs 6.1, 6.2.

Le dispositif d'identification 1 qui équipe le comptoir d'enregistrement A est ici monté au voisinage du tronçon de pesage 111. Plus précisément, le tronçon de pesage 111 forme le support de bagage du dispositif d'identification 1. Les poteaux 5.1, 5.2 sont donc montés de part et d'autre dudit tronçon de pesage 111. Ce positionnement est avantageux car, lors de l'opération de pesage, le bagage 100 est immobile sur le tronçon de pesage 111, ce qui facilite la capture des images.

L'unité informatique 2 de ce dispositif d'identification 1 est programmée pour déterminer les caractéristiques distinctives visuelles et contextuelles de chaque bagage 100 et les transmettre au système informatique de gestion G pour que les caractéristiques distinctives visuelles et contextuelles soient enregistrées dans la base de données en association avec le nom du passager et le véhicule de transport affrété pour le voyage du passager et de son bagage.

Le dispositif d'identification 1 qui équipe la zone H est lui ici disposé au voisinage d'une table qui forme le support de bagage du dispositif d'identification 1, les poteaux 5.1, 5.2 étant montés de part et d'autre de ladite table.

L'unité informatique 2 de ce dispositif d'identification 1 est programmée pour déterminer les caractéristiques distinctives visuelles et contextuelles de chaque bagage 100 et les transmettre au système informatique de gestion G pour que les caractéristiques distinctives visuelles et contextuelles transmises soient comparées à celles enregistrées dans la base de données afin de retrouver le nom du passager auquel appartient le bagage 100 se trouvant dans la zone H, et/ou retrouver le véhicule de transport qui doit embarquer ledit bagage 100.

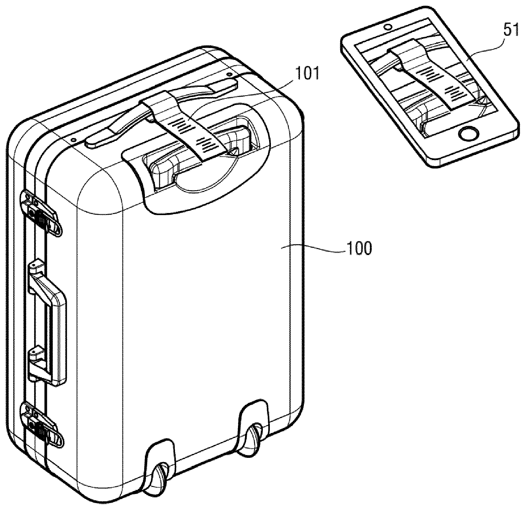

Il est également prévu d'équiper certains agents de l'opérateur avec des terminaux de télécommunication 51, de type ordiphone (plus couramment appelés smartphone), comme celui représenté sur la figure 3, qui exécute un programme d'identification comprenant les étapes de :
- commander la caméra du terminal pour acquérir des images d'un bagage 100 en demandant à l'opérateur de se déplacer pour que les images soient capturées selon plusieurs directions de prise de vue,
- extraire de ces images des caractéristiques distinctives et les transmettre au système informatique de gestion G pour que ce dernier les compare à celles mémorisées dans la base de données et retrouve le nom du passager propriétaire du bagage 100 et/ou du véhicule de transport qui doit embarquer ledit bagage ; ou transmettre les images au système informatique de gestion G pour que ce dernier puisse en extraire les caractéristiques distinctives et les compare à celles mémorisées dans la base de données et retrouve le nom du passager propriétaire du bagage 100 et/ou le véhicule de transport qui doit embarquer ledit bagage.

L'installation de transport de bagages, les dispositifs d'identification 1 et 51 permettent la mise en oeuvre d'un procédé de suivi de bagages, comprenant une phase d'enrôlement et une phase de reconnaissance.

La phase d'enrôlement, qui a lieu au comptoir d'enregistrement A, comprend les étapes suivantes :
- peser le bagage 100 et mémoriser un poids du bagage 100 (le poids du bagage 100 constitue une caractéristique distinctive contextuelle du bagage 100) en association avec l'identifiant dans la base de données hébergée dans la mémoire d'une unité informatique du système informatique de gestion G,
- pendant le pesage, capturer des images du bagage 100 dans le comptoir d'enregistrement A au moyen du dispositif d'identification 1 et en extraire des caractéristiques distinctives visuelles au moyen du programme informatique de traitement d'images exécuté par l'unité informatique 2,
- mémoriser les caractéristiques distinctives visuelles avec un identifiant, ici le nom du passager, son numéro de voyage et une donnée d'horodatage (la donnée d'horodatage constitue une autre caractéristique distinctive contextuelle du bagage 100) dans la base de données hébergée dans la mémoire d'une unité informatique du système informatique de gestion G.

La phase de reconnaissance, qui a lieu dans la zone H ou en tout autre lieu en utilisant le terminal de télécommunication 51, comprend les étapes suivantes :
- capturer des images d'un bagage 100 à reconnaître et en extraire des caractéristiques distinctives visuelles au moyen du programme informatique de traitement d'images exécuté par l'unité informatique 2, si un dispositif d'identification 1 est utilisé, ou par le terminal de télécommunication,
- faire comparer par un programme de reconnaissance les caractéristiques distinctives visuelles extraites lors de la phase de reconnaissance avec les caractéristiques distinctives visuelles mémorisées avec une donnée d'horodatage comprise dans une plage temporelle prédéterminée, et calculer un score de similarité,
- considérer le bagage reconnu lorsque le score de similarité est supérieur ou égal à un seuil prédéterminé.

Il est à noter, que pour accélérer le traitement, le bagage à reconnaître est pesé lors de la phase de reconnaissance et les caractéristiques distinctives extraites lors de la phase de reconnaissance ne sont comparées qu'avec les caractéristiques distinctives mémorisées avec un poids similaire à celui du bagage 100 à reconnaître. Cette option peut être mise en oeuvre dans la zone H si le dispositif d'identification 1 qui équipe cette zone est pourvu d'un dispositif de pesage.

Bien entendu, l'invention n'est pas limitée au mode de réalisation décrit mais englobe toute variante entrant dans le champ de l'invention telle que définie par les revendications.

En particulier, le dispositif d'acquisition 1 peut avoir une structure différente de celle décrite.

L'organe d'acquisition peut comprendre plus de deux caméras, par exemple trois disposées autour du support. Chaque poteau peut ne porter qu'une caméra, ou deux caméras sensibles aux mêmes longueurs d'onde mais orientées différemment l'une de l'autre et/ou à des hauteurs différentes.

L'organe d'acquisition peut comprendre au moins deux capteurs optiques 3.1, 3.2, 4.1, 4.2 reliés à l'unité informatique 2 de traitement d'images et montés chacun sur un poteau 5.1, 5.2 à des hauteurs différentes, les poteaux étant diamétralement opposés de part et d'autre d'un centre du support.

L'organe d'acquisition peut comprendre quatre capteurs optiques reliés à l'unité informatique 2 de traitement d'images et montés chacun sur un poteau 5.1, 5.2, les poteaux étant uniformément répartis autour du support.

Le dispositif peut comprendre un nombre différent de poteaux, par exemple deux, trois ou quatre poteaux portant chacun un ou plusieurs capteurs optiques. La solution à quatre poteaux est très intéressante car elle permet d'obtenir des images relativement détaillées de l'ensemble du pourtour du bagage et de sa surface supérieure. Seule la surface inférieure du bagage n'est pas visible. On notera toutefois qu'on pourrait prévoir un support transparent ou suffisamment ajouré sous lequel serait disposé au moins un capteur optique pour capturer une image de la surface inférieure du bagage.

L'utilisation de caméras stéréoscopiques est facultative. L'identifiant est un nom du détenteur du bagage lors de l'enrôlement ou un numéro lisible sur une étiquette portée par le bagage.

La phase d'enrôlement peut être réalisée lors de l'opération de pesage du bagage ou à un autre moment et par exemple lors d'une opération dédiée.

La caméra portable peut appartenir à un dispositif d'identification portable dédié configuré pour communiquer avec l'unité informatique hébergeant la base de données.

L'acquisition des caractéristiques visuelles distinctives peut être réalisée au niveau du tronçon de pesée pais aussi à tout autre endroit le long du trajet du bagage. Le support de bagage peut être monté sur un organe de pesage 112.

Le support de bagage peut être un tapis roulant 111.

Par exemple, dans un système d'horodatage et/ou de localisation du bagage disposé en un point le long du cheminement du bagage.

Le procédé peut comprendre, optionnellement, en amont de la phase de reconnaissance, l'étape de déterminer les caractéristiques distinctive contextuelles du bagage 100 ; et, lors de la reconnaissance, les étapes de :
o faire comparer par un programme de comparaison les caractéristiques distinctives contextuelles extraites avec les caractéristiques distinctives contextuelles mémorisées, et calculer un score de similarité,
o filtrer et conserver les données des bagages enrôlés dont des caractéristiques distinctives contextuelles mémorisées pour lesquels le score de similarité correspond à une valeur comprise dans une plage prédéterminée.

Lesdites caractéristiques distinctives contextuelles sont par exemple une donnée de poids ou une donnée d'horodatage comprise dans une plage temporelle prédéterminée ou toutes autres données.

On pourrait n'utiliser qu'une caractéristique distinctive contextuelle (le poids, la donnée d'horodatage, ou une autre donnée) ou ne pas en utiliser du tout.

L'invention est applicable à toute infrastructure de traitement de bagages comme les ports, les gares ferroviaires, les gares routières, les aéroports...

## Revendications

1. Dispositif d'identification d'un bagage (100), comprenant un support de bagage et au moins un organe d'acquisition d'images du bagage selon au moins deux directions de prise de vue inclinées l'une par rapport à l'autre, l'organe d'acquisition étant relié à une unité informatique (2) de traitement d'images programmée pour commander l'organe d'acquisition et extraire des images des caractéristiques représentatives du bagage, l'organe d'acquisition comprenant au moins deux capteurs optiques (3.1, 3.2, 4.1, 4.2) reliés à l'unité informatique (2) de traitement d'images ; **caractérisé en ce que** le dispositif d'identification comprend au moins deux poteaux (5.1,5.2), les poteaux étant diamétralement opposés de part et d'autre d'un centre du support, et **en ce que** lesdits au moins deux capteurs optiques sont montés chacun sur un poteau (5.1, 5.2) à des hauteurs différentes.

2. Dispositif selon la revendication 1, comprenant deux capteurs optiques (3.1, 4.1, 3.2, 4.2) sur chaque poteau (5.1, 5.2), les deux capteurs optiques étant sensibles à des plages de longueurs d'onde différentes.

3. Dispositif selon la revendication 2, dans lequel chaque poteau (5.1, 5.2) porte un capteur optique (3.1, 4.1) sensible notamment au rayonnement infrarouge et un capteur optique (3.2, 4.2) sensible notamment au rayonnement visible.

4. Dispositif selon l'une quelconque des revendications 1 à 3, dans lequel l'organe d'acquisition comprend quatre capteurs optiques reliés à l'unité informatique (2) de traitement d'images et montés chacun sur un poteau (5.1, 5.2), les poteaux étant uniformément répartis autour du support.

5. Dispositif selon l'une quelconque des revendications précédentes, dans lequel l'organe d'acquisition d'images comporte deux caméras disposées pour fournir une vision stéréoscopique.

6. Dispositif selon la revendication 5, comportant un émetteur (6.1, 6.2) d'un faisceau lumineux structuré.

7. Dispositif selon l'une quelconque des revendications précédentes, comprenant au moins une lampe (7.1, 7.2) d'éclairage du support.

8. Dispositif selon l'une quelconque des revendications précédentes, dans lequel le support de bagage est monté sur un organe de pesage (112).

9. Dispositif selon l'une quelconque des revendications précédentes, dans lequel le support de bagage est un tapis roulant (111).

10. Dispositif selon l'une quelconque des revendications précédentes, dans lequel les caractéristiques distinctives comprennent au moins l'une des caractéristiques suivantes : la forme et/ou des dimensions du bagage, la couleur du bagage, la forme et/ou des dimensions d'une poignée du bagage, la forme et/ou des dimensions de roulettes, un profil d'au moins une des arêtes du bagage, la forme et/ou les dimensions d'un motif présent sur le bagage.

## Patentansprüche

1. Vorrichtung zur Identifizierung eines Gepäckstücks (100), beinhaltend einen Gepäckstückträger und mindestens eine Einrichtung zur Erfassung von Bildern des Gepäckstücks gemäß mindestens zwei Aufnahmerichtungen, die relativ zueinander geneigt sind, wobei die Erfassungseinrichtung mit einer Recheneinheit (2) zur Verarbeitung von Bildern verbunden ist, die dazu programmiert ist, die Erfassungseinrichtung zu steuern und Bilder der repräsentativen Merkmale des Gepäckstücks zu extrahieren, wobei die Erfassungseinrichtung mindestens zwei optische Sensoren (3.1, 3.2, 4.1, 4.2) beinhaltet, die mit der Recheneinheit (2) zur Verarbeitung von Bildern verbunden sind; **dadurch gekennzeichnet, dass** die Identifizierungsvorrichtung mindestens zwei Pfosten (5.1, 5.2) beinhaltet, wobei sich die Pfosten zu beiden Seiten einer Mitte des Trägers diametral gegenüberliegen, und dass die mindestens zwei optischen Sensoren jeweils in unterschiedlichen Höhen an einem Pfosten (5.1, 5.2) montiert sind.

2. Vorrichtung nach Anspruch 1, die zwei optische Sensoren (3.1, 4.1, 3.2, 4.2) an jedem Pfosten (5.1, 5.2) beinhaltet, wobei die zwei optischen Sensoren auf unterschiedliche Wellenlängenbereiche ansprechen.

3. Vorrichtung nach Anspruch 2, wobei jeder Pfosten (5.1, 5.2) einen optischen Sensor (3.1, 4.1), der insbesondere auf Infrarotstrahlung anspricht, und einen optischen Sensor (3.2, 4.2), der insbesondere auf sichtbare Strahlung anspricht, trägt.

4. Vorrichtung nach einem beliebigen der Ansprüche 1 bis 3, wobei die Erfassungseinrichtung vier optische Sensoren beinhaltet, die mit der Recheneinheit (2) zur Verarbeitung von Bildern verbunden sind und jeweils an einem Pfosten (5.1, 5.2) montiert sind, wobei die Pfosten gleichmäßig um den Träger herum verteilt sind.

5. Vorrichtung nach einem beliebigen der vorhergehenden Ansprüche, wobei die Bilderfassungseinrichtung zwei Kameras umfasst, die dazu angeordnet sind, eine räumliche Ansicht zu liefern.

6. Vorrichtung nach Anspruch 5, die einen Emitter (6.1, 6.2) eines strukturierten Lichtstrahls umfasst.

7. Vorrichtung nach einem beliebigen der vorhergehenden Ansprüche, die mindestens eine Lampe (7.1, 7.2) zur Beleuchtung des Trägers beinhaltet.

8. Vorrichtung nach einem beliebigen der vorhergehenden Ansprüche, wobei der Gepäckstückträger auf einer Wiegeeinrichtung (112) montiert ist.

9. Vorrichtung nach einem beliebigen der vorhergehenden Ansprüche, wobei der Gepäckstückträger ein Laufband (111) ist.

10. Vorrichtung nach einem beliebigen der vorhergehenden Ansprüche, wobei die Unterscheidungsmerkmale mindestens eines der folgenden Merkmale beinhalten: die Form und/oder Maße des Gepäckstücks, die Farbe des Gepäckstücks, die Form und/oder Maße eines Griffs des Gepäckstücks, die Form und/oder Maße von Rollen, ein Profil mindestens einer der Kanten des Gepäckstücks, die Form und/oder die Maße eines auf dem Gepäckstück vorhandenen Musters.

## Claims

1. Device for identifying baggage (100), comprising a baggage support and at least one member for acquiring images of the baggage from at least two exposure directions that are inclined with respect to one another, the acquisition member being linked to an image processing computing unit (2) programmed to control the acquisition member and extract images of the representative features of the baggage, the acquisition member comprising at least two optical sensors (3.1, 3.2, 4.1, 4.2) linked to the image processing computing unit (2); **characterized in that** the identification device comprises at least two posts (5.1, 5.2), the posts being diametrically opposite on either side of a centre of the support, and **in that** said at least two optical sensors are each mounted on a post (5.1, 5.2) at different heights.

2. Device according to Claim 1, comprising two optical sensors (3.1, 4.1, 3.2, 4.2) on each post (5.1, 5.2), the two optical sensors being sensitive to different wavelength ranges.

3. Device according to Claim 2, wherein each post (5.1, 5.2) bears an optical sensor (3.1, 4.1) that is sensitive in particular to infrared radiation and an optical sensor (3.2, 4.2) that is sensitive in particular to visible radiation.

4. Device according to any one of Claims 1 to 3, wherein the acquisition member comprises four optical sensors linked to the image processing computing unit (2) and each mounted on a post (5.1, 5.2), the posts being uniformly distributed around the support.

5. Device according to any one of the preceding claims, wherein the image acquisition member comprises two cameras arranged so as to provide stereoscopic vision.

6. Device according to Claim 5, comprising an emitter (6.1, 6.2) of a structured light beam.

7. Device according to any one of the preceding claims, comprising at least one lamp (7.1, 7.2) for illuminating the support.

8. Device according to any one of the preceding claims, wherein the baggage support is mounted on a weighing member (112).

9. Device according to any one of the preceding claims, wherein the baggage support is a conveyor (111).

10. Device according to any one of the preceding claims, wherein the distinctive features comprise at least one of the following features: the form and/or dimensions of the baggage, the colour of the baggage, the form and/or dimensions of a baggage handle, the form and/or dimensions of castors, a profile of at least one of the edges of the baggage, the form and/or the dimensions of a pattern present on the baggage.
